(19) Europäisches Patentamt / European Patent Office / Office européen des brevets

(11) **EP 4 368 750 A1**

(12) **EUROPEAN PATENT APPLICATION**
published in accordance with Art. 153(4) EPC

(43) Date of publication:
**15.05.2024 Bulletin 2024/20**

(21) Application number: **22837733.9**

(22) Date of filing: **07.07.2022**

(51) International Patent Classification (IPC):
*C25B 5/00* $^{(2006.01)}$   *C07C 51/235* $^{(2006.01)}$
*C07C 59/125* $^{(2006.01)}$   *C25B 3/07* $^{(2021.01)}$
*C25B 3/23* $^{(2021.01)}$   *H01M 8/06* $^{(2016.01)}$
*H01M 8/1009* $^{(2016.01)}$

(52) Cooperative Patent Classification (CPC):
**C07C 51/235; C07C 59/125; C25B 3/07;**
**C25B 3/23; C25B 5/00; H01M 8/06; H01M 8/1009;**
**Y02E 60/50**

(86) International application number:
**PCT/JP2022/026933**

(87) International publication number:
**WO 2023/282319 (12.01.2023 Gazette 2023/02)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **09.07.2021   JP 2021114343**

(71) Applicant: **Kao Corporation**
**Tokyo 103-8210 (JP)**

(72) Inventors:
• **MORIOKA, Takuya**
  **Wakayama-shi, Wakayama 640-8580 (JP)**
• **KOTOI, Ryotaro**
  **Wakayama-shi, Wakayama 640-8580 (JP)**
• **ICHIKAWA, Yusuke**
  **Wakayama-shi, Wakayama 640-8580 (JP)**
• **HANAKI, Keigo**
  **Wakayama-shi, Wakayama 640-8580 (JP)**

(74) Representative: **Hoffmann Eitle**
**Patent- und Rechtsanwälte PartmbB**
**Arabellastraße 30**
**81925 München (DE)**

(54) **METHOD FOR PRODUCING POLYOXYALKYLENE ALKYL ETHER ACETATE**

(57)    Provided is a method for producing polyoxyalkylene alkyl ether acetate, the method including a step (A) of oxidizing a polyoxyalkylene alkyl ether by an electrochemical reaction in an anode chamber of an electrochemical device equipped with a cathode chamber and the anode chamber to obtain the polyoxyalkylene alkyl ether acetate.

EP 4 368 750 A1

**Description**

Technical Field

The present invention relates to a method for producing polyoxyalkylene alkyl ether acetate.

Background Art

Polyoxyalkylene alkyl ether acetates are compounds made by oxidizing and carboxylating a terminal of polyoxyalkylene alkyl ethers, and are known as anionic surfactants usable for, for example, cosmetics, emulsifiers, solubilizers, dispersants, gelatinizers and detergent bases.

Polyoxyalkylene alkyl ether acetates can be regulated in their properties by changing pH. Polyoxyalkylene alkyl ether acetates are excellent in the hard water resistance and since their aqueous solutions are stable to various polyvalent metal ions such as calcium ions and aluminum ions and are mild in the action on skins, applications to various uses are expected.

Examples of technologies regarding methods for producing polyoxyalkylene alkyl ether acetates include a technology described in JP 2013-14581 A (PTL 1).

The PTL 1 describes that a method for producing polyoxyalkylene alkyl ether acetate by feeding oxygen to a liquid phase containing water and a polyoxyalkylene ether having a hydrocarbon group on the terminal (hereinafter, referred to as "polyoxyalkylene alkyl ether") to dehydrogenatively oxidizing the polyoxyalkylene alkyl ether in the presence of a platinum catalyst, wherein the mass ratio of the total mass of the polyoxyalkylene alkyl ether and the polyoxyalkylene alkyl ether acetate in the liquid phase to the mass of the water (the total mass of the polyoxyalkylene alkyl ether and the polyoxyalkylene alkyl ether acetate/the mass of the water) is 60/40 to 95/5, can provide the polyoxyalkylene alkyl ether acetate high in the active component concentration with no need of removal operation of inorganic salts and complex concentration operation and only by a process of filtration of the catalyst after the finish of the reaction.

On the other hand, in recent years, methods for producing organic compounds by using electrochemical device systems such as fuel cells have been studied.

For example, Japanese Translation of PCT International Application Publication No. 2019-506370 (PTL 2) describes a process for producing at least one furan compound having at least one aldehyde functional group and an electric power by oxidizing at least one furan compound having at least one hydroxyl functional group, wherein the reaction is carried out in an electricity generating apparatus having, at least, one anode, one cathode and one separator, and an anode reactant is the furan compound having at least one hydroxyl functional group and a cathode reactant is an oxidant.

Summary of Invention

The present invention relates to a method for producing polyoxyalkylene alkyl ether acetate, the method comprising a step (A) of oxidizing a polyoxyalkylene alkyl ether by an electrochemical reaction in an anode chamber of an electrochemical device equipped with a cathode chamber and the anode chamber to obtain the polyoxyalkylene alkyl ether acetate.

Brief Description of Drawings

[Fig. 1] Fig. 1 is a schematic diagram showing an experimental apparatus used in Examples.
[Fig. 2] Fig. 2 is a schematic diagram showing an experimental apparatus used in Comparative Examples.
[Fig. 3] Fig. 3 is graphs showing comparison of molar fractions of products with large numbers of mols of EO added in polyoxyalkylene alkyl ether acetates obtained in Examples and Comparative Examples.

Description of Embodiments

The method for producing polyoxyalkylene alkyl ether acetate described in PTL 1 needs a process of separating a product and a catalyst, and has room for improvement from the viewpoint of simplification of the production process. Then, PTL 2 only describes a reaction of oxidizing a furan compound having a hydroxyl functional group to a furan compound having an aldehyde functional group by using an electrochemical device system.

The present invention relates to providing a novel method, whose production process can be simplified, for producing polyoxyalkylene alkyl ether acetate by using an electrochemical reaction.

Then, polyoxyalkylene alkyl ether acetates are used as a surfactant or the like in various applications, and there are also applications desiring polyoxyalkylene alkyl ether acetate containing more of components large in the number of mols of alkyleneoxy groups added (number of mols of AO added).

Since high-molecular weight compounds such as polyoxyalkylene alkyl ethers are high in the viscosity and low in the diffusibility and have the foaming property, it cannot easily be thought of that polyoxyalkylene alkyl ether acetate is produced by oxidizing a polyoxyalkylene alkyl ether by an electrochemical reaction. The present inventors, however, have found that an electrochemical oxidative reaction of a polyoxyalkylene alkyl ether progresses in an anode chamber of an electrochemical device to thereby obtain polyoxyalkylene alkyl ether acetate, and this finding has led to the completion of the present invention.

That is, the present invention relates to the following [1].

[1] A method for producing polyoxyalkylene alkyl ether acetate, the method including a step (A) of oxidizing a polyoxyalkylene alkyl ether by an electrochemical reaction in an anode chamber of an electrochemical device equipped with a cathode chamber and the anode chamber to obtain the polyoxyalkylene alkyl ether acetate.

[2] A method for generating an electric power, the method including a step (A) of oxidizing a polyoxyalkylene alkyl ether by an electrochemical reaction in an anode chamber of an electrochemical device equipped with a cathode chamber and the anode chamber to obtain polyoxyalkylene alkyl ether acetate.

[3] A system for generating an electric power, the system including a step (A) of oxidizing a polyoxyalkylene alkyl ether by an electrochemical reaction in an anode chamber of an electrochemical device equipped with a cathode chamber and the anode chamber to obtain polyoxyalkylene alkyl ether acetate.

According to the present invention, a novel method, whose production process can be simplified and which uses an electrochemical reaction, for producing polyoxyalkylene alkyl ether acetate can be provided.

Further according to the present invention, a novel method for producing polyoxyalkylene alkyl ether acetate containing more of components large in the number of mols of alkyleneoxy groups added (number of mols of AO added) can be provided.

Further according to the present invention, an energy difference between before and after the reaction can be extracted as a direct current, enabling an electric power generation to be materialized.

[Method for producing polyoxyalkylene alkyl ether acetate]

The method for producing polyoxyalkylene alkyl ether acetate of the present invention comprises a step (A) of oxidizing a polyoxyalkylene alkyl ether (hereinafter, referred to also as "AE") by an electrochemical reaction in an anode chamber of an electrochemical device equipped with a cathode chamber and the anode chamber to obtain the polyoxyalkylene alkyl ether acetate (hereinafter, referred to also as "EC").

According to the present embodiment, a novel method, whose production process can be simplified, which uses an electrochemical reaction, for producing polyoxyalkylene alkyl ether acetate can be provided. Then, according to the method for producing polyoxyalkylene alkyl ether acetate according to the present invention, polyoxyalkylene alkyl ether acetate containing more of components large in the number of mols of alkyleneoxy groups added can be obtained.

Then, the above electrochemical reaction exhibits a negative change in Gibbs energy, implying the possibility that the energy difference between before and after the reaction can be extracted as a direct current, and according to the production method according to the present invention, the materialization of electric power generation can be confirmed. Then, although conventional production methods, since discharging the difference in Gibbs energy as heat generation, need heat removal in the reaction process, the production method according to the present invention can reduce the heat removal load.

In the present description, the polyoxyalkylene alkyl ether refers to a polyoxyalkylene ether whose terminal has a hydrocarbon group, and the hydrocarbon group also includes hydrocarbon groups other than alkyl groups.

<Step (A)>

The step (A) is a step of oxidizing a polyoxyalkylene alkyl ether by an electrochemical reaction in an anode chamber of an electrochemical device equipped with a cathode chamber and the anode chamber to obtain polyoxyalkylene alkyl ether acetate.

In the case of using a fuel cell as the electrochemical device, for example, by feeding a gas containing oxygen to the cathode chamber and feeding a solution (preferably, an aqueous solution) containing a polyoxyalkylene alkyl ether to the anode chamber, in the anode chamber, the polyoxyalkylene alkyl ether is dehydrogenatively oxidized and polyoxyalkylene alkyl ether acetate can be formed.

Reactions in the cathode chamber and the anode chamber are shown in the below.

Anode: AE + H$_2$O → EC + 4H$^+$ + 4e$^-$

Cathode: O$_2$ + 4H$^+$ + 4e$^-$ -> 2H$_2$O

(Polyoxyalkylene alkyl ether)

The polyoxyalkylene alkyl ether to be used in the production method according to the present invention has a hydrocarbon group on the terminal. The hydrocarbon group is not limited to an alkyl group and examples thereof include aliphatic hydrocarbon groups, alicyclic hydrocarbon groups and aromatic hydrocarbon groups.

The polyoxyalkylene alkyl ether, from the viewpoint of improvement in the yield and the reactivity, preferably contains a compound represented by the following formula (1) and more preferably, is a compound represented by the following formula (1).

R-O-(A-O)$_n$-H ...              (1)

In the formula (1), R represents a hydrocarbon group having 1 or more and 36 or less carbon atoms; A represents an alkylene group having 2 or more and 4 or less carbon atoms; and n is an average number of mols of alkyleneoxy groups added and is the number of 0.1 or larger and 100.0 or smaller.

R and the others in the formula (1) can suitably be determined in the ranges of the above definitions according to objective performance, applications and the like.

A in the formula (1) is preferably an alkylene group having 2 or 3 carbon atoms, and more preferably an alkylene group having 2 carbon atoms, that is, an ethyleneoxy group (hereinafter, referred to also as "EO").

R in the formula (1) is a hydrocarbon group having 1 or more and 36 or less carbon atoms. The number of carbon atoms of R is, from the viewpoint of improvement in the detergency, the foaming property and the use impression (for example, the rinsing property and the slippery touch), for example, in the case of using an obtained polyoxyalkylene alkyl ether acetate as a detergent, 1 or larger, preferably 4 or larger, more preferably 6 or larger and still more preferably 8 or larger, and from the viewpoint of improvement in the reactivity, 36 or smaller, preferably 32 or smaller, more preferably 22 or smaller, still more preferably 20 or smaller, further still more preferably 18 or smaller, further still more preferably 16 or smaller, further still more preferably 14 or smaller and further still more preferably 12 or smaller.

The hydrocarbon group of R is preferably a saturated or unsaturated straight-chain, branched-chain or cyclic aliphatic hydrocarbon group, or an aromatic hydrocarbon group optionally having a substituent, more preferably a straight-chain or branched-chain alkyl group or alkenyl group, still more preferably a straight-chain or branched-chain alkyl group and further still more preferably a straight-chain alkyl group.

Examples of the straight-chain or branched-chain alkyl group represented by R in the formula (1) include a propyl group, a butyl group, a pentyl group, a hexyl group, a heptyl group, an octyl group, a nonyl group, a decyl group, an undecyl group, a dodecyl group, a tridecyl group, a tetradecyl group, a pentadecyl group, a hexadecyl group, a heptadecyl group, an octadecyl group, a nonadecyl group, an icosyl group, an eicosyl group, a henicosyl group, a heneicosyl group, a docosyl group and a tetracosyl group.

Examples of the straight-chain or branched-chain alkenyl group represented by R in the formula (1) include a propenyl group, a butenyl group, a pentenyl group, a hexenyl group, a heptenyl group, an octenyl group, a nonenyl group, a decenyl group, an undecenyl group, a dodecenyl group, a tridecenyl group, a tetradecenyl group, a pentadecenyl group, a hexadecenyl group, a heptadecenyl group, an octadecenyl group, a nonadecenyl group, an icosenyl group, an eicosenyl group, an henicosenyl group, a heneicosenyl group, a docosenyl group and a tetracosenyl group; and various straight-chain or branched-chain alkadienyl groups or alkatrienyl groups, such as an octadecadienyl group and an octadecatrienyl group, can also be used.

Examples of the cyclic aliphatic hydrocarbon group represented by R in the formula (1) include a cyclooctyl group, a cyclodecyl group, a cyclododecyl group, a cyclooctenyl group, a cyclodecenyl group, a cyclododecenyl group, a 2-(cyclohexyl)ethyl group, a 3-(cyclohexyl)propyl group, a 2-(cyclohexenyl)ethyl group and a 3-(cyclohexenyl)propyl group.

The aromatic hydrocarbon group represented by R in the formula (1) may further have a substituent, and the number of carbon atoms of the aromatic hydrocarbon group is the number of carbon atoms including the substituent. Examples of the substituent include an alkyl group, a benzyl group, a phenethyl group, a styryl group, a cinnamyl group and alkyleneoxy groups, or the like. Examples of the aromatic hydrocarbon group include a 2,2-diphenylenepropane group, a phenoxyethyl group, a nonylphenyl group, a tribenzylphenyl group and a distyrylphenyl group (distyrenated phenyl group), or the like.

Examples of polyoxyalkylene alkyl ethers in which R in the formula (1) is an aromatic hydrocarbon group include EO adducts of bisphenol A, EO adducts of phenoxyethanol, EO adducts of nonylphenol, EO adducts of distyrenated phenol and EO adducts of tribenzylphenol, or the like.

Examples of the alkylene group having 2 or more and 4 or less carbon atoms represented by A in the formula (1) include at least one selected from the group consisting of an ethylene group, a propylene group, an isopropylene group, an n-butylene group and an isobutylene group. Among these, A is, from the viewpoint of easy availability, preferably an alkylene group having 2 or more and 3 or less carbon atoms, more preferably at least one selected from the group consisting of an ethylene group and a propylene group, and still more preferably an ethylene group.

n in the formula (1) is the average number of mols of alkyleneoxy groups (A-O) added, and from the viewpoint of improvement in the detergency, the foaming property, the use impression (for example, the rinsing property and the slippery touch) and the stability in hard water, for example, in the case of using an obtained polyoxyalkylene alkyl ether acetate as a detergent, n is 0.1 or larger, preferably 1.0 or larger, more preferably 1.5 or larger and still more preferably 2.0 or larger; and from the viewpoint of improvement in the reactivity, n is 100.0 or smaller, preferably 50.0 or smaller, more preferably 30.0 or smaller, still more preferably 16.0 or smaller, further still more preferably 14.0 or smaller, further still more preferably 12.0 or smaller and further still more preferably 10.0 or smaller.

In the production method according to the present invention, in the case of using a compound represented by the formula (1) as the polyoxyalkylene alkyl ether, for example, polyoxyalkylene alkyl ether acetate represented by the following formula (2) can be obtained.

$$R\text{-}O\text{-}(A\text{-}O)_m\text{-}(CH_2)_a COOH \ ... \qquad (2)$$

In the formula (2), R and A have the same meanings as in the formula (1); and a is the number of carbon atoms of A - 1, and m + 1 is the average number of mols of alkyleneoxy groups added.

Here, the method for producing polyoxyalkylene alkyl ether acetate according to the present invention, as compared with the production method described in PTL 1 (JP 2013-14581 A), can improve the reactivity of a polyoxyalkylene alkyl ether large in the number of mols of alkyleneoxy groups added (hereinafter, referred to also as "the number of mols of AO added"), which polyoxyalkylene alkyl ether is relatively slow in the reaction progress. That is, according to the method for producing polyoxyalkylene alkyl ether acetate according to the present invention, polyoxyalkylene alkyl ether acetate containing more of components large in the number of mols of AO added can be obtained. Thereby, according to the method for producing polyoxyalkylene alkyl ether acetate according to the present invention, the polyoxyalkylene alkyl ether acetate can be obtained which is different in the balance in the molar fractions of AO added from polyoxyalkylene alkyl ether acetates obtained by conventional production methods.

The method for producing polyoxyalkylene alkyl ether acetate according to the present invention is especially useful in the case of using, as a raw material, a polyoxyalkylene alkyl ether large in the number of mols of AO added.

(Electrochemical device)

The electrochemical device according to the present invention is equipped with a cathode chamber and an anode chamber.

The electrochemical device according to the present invention includes fuel cells and electrolytic devices, and a fuel cell is preferable.

The fuel cell is not especially limited, and a generally well-known one can be used; examples thereof include solid polymer fuel cells and solid alkali fuel cells; and a solid polymer fuel cell is preferable.

As the solid polymer fuel cell, for example, a device can be used which has a structure in which separators having grooves or a large number of holes to become flow channels are arranged on both surfaces of a membrane electrode assembly.

Examples of the separator include separators composed of various conductive materials, such as metal-made separators, carbon-made separators and separators composed of a mixed material of graphite and a resin.

In the solid polymer fuel cell, a gas containing oxygen is fed to a cathode chamber; a solution (preferably, an aqueous solution) containing a polyoxyalkylene alkyl ether is fed to an anode chamber; and in the anode chamber, polyoxyalkylene alkyl ether acetate can be formed by oxidizing the polyoxyalkylene alkyl ether by an electrochemical reaction. Then, protons formed in the anode chamber migrate to the cathode chamber through an electrolyte membrane, and in the cathode chamber, water is generated and an electric power is generated.

The membrane electrode assembly is equipped, for example, with an anode chamber having a catalyst layer, a cathode chamber having a catalyst layer, and a solid polymer electrolyte membrane arranged between the anode chamber and the cathode chamber.

More specifically, the membrane electrode assembly is equipped with an anode chamber having a catalyst layer and a diffusion layer, a cathode chamber having a catalyst layer and a diffusion layer, and a solid polymer electrolyte membrane arranged in the state of contacting with the catalyst layers between the anode chamber and the cathode chamber.

The catalyst layers are layers containing, for example, a catalyst and a catalyst binder.

Examples of the catalyst include carried catalysts in which platinum or a platinum alloy is carried on a carbon carrier.

Examples of the carbon carrier include carbon black powder, graphitized carbon, carbon fibers and carbon tubes, and the like.

Then, the catalyst may be one containing at least one noble metal selected from the group consisting of Pt, Pd, Ru, Rh, Au and Ir, and is preferably one which contains the above noble metal, and at least one metal element other than the above noble metal, or a nonmetal element. The above metal element or nonmetal element is preferably at least one selected from the group consisting of transition metal elements such as Ru, Rh, Au, Pd, Pt, Ir, Ta, Ni, Ag, Cu, Fe, Mn, Cr, Ti, Co, Zn, Zr, Y, Bi, Pb and Sn; lanthanides such as Ce; other metals such as Al; and nonmetals such as N and P.

These catalysts may be applied on a carrier in order to provide a better distribution. The carrier is preferably a carbon carrier or a metal oxide carrier.

Pt can be used independently as an anode catalyst and a cathode catalyst. It is more preferable that a Pt catalyst further contains Ru and is carried by a carbon carrier.

The catalyst can be purchased, for example, from Johnson Matthey PLC, BASF SE, Premetek Co., Evonik Industries AG or Tanaka Kikinzoku Kogyo K.K.

The catalyst may be used directly as a bulk electrode in different shapes such as sheet, net, foam, foil or belt, or may be used by being applied on a carrier by a method such as spreading, wet spraying, powder deposition, electrodeposition, vapor deposition, dry spraying, transfer, coating, sputtering, low-pressure vapor deposition, electrochemical vapor deposition, tape casting or screen printing.

Examples of the catalyst binder include well-known catalyst binders used for catalyst layers, and specifically include perfluorocarbonsulfonic acid-based polymers such as "Nafion" (registered trademark, DuPont de Nemours, Inc.) and fluororesins such as polytetrafluoroethylene (PTFE), tetrafluoroethylene-hexafluoropropylene copolymers (FEP) and polyvinylidene fluoride (PVDF).

The diffusion layer is constituted of a material having conductivity and gas permeability, and has a function of causing gas to homogeneously diffuse in the catalyst layer and a function as a current collector.

Examples of the diffusion layer include porous materials constituted of carbon fibers, such as carbon paper, carbon cloth or carbon felt.

Examples of the solid polymer electrolyte membrane include fluoropolymer electrolyte membranes composed of perfluorocarbon sulfonate-based polymers such as "Nafion" (registered trademark, DuPont de Nemours, Inc.); engineering plastic polymer electrolyte membranes of sulfonated polyether sulfone, sulfonated polyether ketone or the like; polymer electrolyte membranes composed of a polybenzimidazole impregnated with phosphoric acid or sulfuric acid; and polymer electrolyte membranes composed of a sulfonated styrene-based polymer, such as CSE (NEOSEPTA, containing sulfonated styrene-based copolymer, Astom Corp.), CMB (NEOSEPTA, containing a sulfonated styrene-divinylbenzene-based copolymer, Astom Corp.) and CMVN (SELEMION™, containing a sulfonated divinylbenzene-styrene copolymer, AGC Engineering Co., Ltd.).

The membrane electrode assembly and the fuel cell can be produced, for example, by conventionally well-known methods.

In the production method according to the present invention, in the anode chamber at the start of the reaction, it is preferable that the polyoxyalkylene alkyl ether is present in the state of being a mixture with water; and the content of the polyoxyalkylene alkyl ether in the mixture at the start of the reaction is, with the total amount of the polyoxyalkylene alkyl ether and the water being taken to be 100% by mass, from the viewpoint of the suppression of an increase in the viscosity of the liquid phase, the suppression of the formation of aldehyde and the improvement in the productivity, preferably 1% by mass or higher, more preferably 2% by mass or higher, still more preferably 3% by mass or higher and further still more preferably 4% by mass or higher, and from the similar viewpoint, preferably 95% by mass or lower, more preferably 70% by mass or lower, still more preferably 50% by mass or lower, further still more preferably 30% by mass or lower, further still more preferably 15% by mass or lower and further still more preferably 10% by mass or lower.

In the production method according to the present invention, the total content of the polyoxyalkylene alkyl ether and water in the liquid phase in the anode chamber at the start of the reaction is, from the viewpoint of the suppression of an increase in the viscosity of the liquid phase, the suppression of the formation of aldehyde and the improvement in the productivity, preferably 65% by mass or higher, more preferably 72% by mass or higher, still more preferably 80% by mass or higher, further still more preferably 90% by mass or higher and further still more preferably 95% by mass or higher, and may also be 100% by mass.

In the production method according to the present invention, in the case of using a fuel cell as the electrochemical device, in the step (A), it is preferable that a gas containing oxygen is fed to the cathode chamber.

The feeding of oxygen to the cathode chamber can be carried out by blowing an oxygen gas or an oxygen-containing mixed gas (for example, air) in the liquid phase. Alternatively, the feeding may be carried out by gas-phase flowing of the oxygen gas or the oxygen-containing mixed gas to carry out the reaction under the gas atmosphere.

In the case of using the oxygen-containing mixed gas, the gas to be mixed with the oxygen is preferably an inert gas, for example, helium, argon or nitrogen.

In the production method according to the present invention, the feeding rate of the polyoxyalkylene alkyl ether solution to the anode chamber, since being suitably set according to the size of the device, the amount to be processed, and the like, is not especially limited.

In the production method according to the present invention, the temperature of the anode chamber in the step (A), that is, the reaction temperature when the polyoxyalkylene alkyl ether is dehydrogenatively oxidized is, from the viewpoint of the improvement in the reactivity, preferably 10°C or higher, more preferably 20°C or higher, still more preferably 30°C or higher and further still more preferably 35°C or higher, and from the similar viewpoint, preferably 100°C or lower, more preferably 80°C or lower, still more preferably 60°C or lower, further still more preferably 50°C or lower and further still more preferably 45°C or lower.

In the production method according to the present invention, the reaction time, since being suitably set according to the size of the device, the amount to be processed, the voltage, the temperature and the like, is not especially limited, but is, for example, 0.5 hour to 50 hours.

Applications of the polyoxyalkylene alkyl ether acetate according to the present embodiment are not especially limited, but include surfactants and the like which can be used for cosmetics, emulsifiers, solubilizers, dispersants, gelatinizers, detergent bases and the like.

The polyoxyalkylene alkyl ether acetate according to the present embodiment can contain more of components large in the number of mols of AO added. Hence, the polyoxyalkylene alkyl ether acetate according to the present embodiment can suitably be utilized for the regulations of properties in the above applications.

[Method of regulating the molar fraction of alkyleneoxy groups added in the polyoxyalkylene alkyl ether acetate]

A method of regulating the molar fraction of alkyleneoxy groups added in the polyoxyalkylene alkyl ether acetate of the present invention includes a step (A) of oxidizing a polyoxyalkylene alkyl ether by an electrochemical reaction in an anode chamber of an electrochemical device equipped with a cathode chamber and the anode chamber to obtain the polyoxyalkylene alkyl ether acetate.

According to the regulation method of the present invention, the molar fractions of polyoxyalkylene alkyl ether acetates large in the number of mols of AO added can be improved.

A preferable mode of the step (A) in the regulation method of the present invention is the same as in the above-mentioned method for producing polyoxyalkylene alkyl ether acetate according to the present invention.

Here, it can be evaluated by a method described in Examples that the polyoxyalkylene alkyl ether acetate according to the present embodiment can contain more of components large in the number of mols of AO added.

[Method for generating an electric power]

The method for generating an electric power of the present invention includes a step (A) of oxidizing a polyoxyalkylene alkyl ether by an electrochemical reaction in an anode chamber of an electrochemical device equipped with a cathode chamber and the anode chamber to obtain polyoxyalkylene alkyl ether acetate. Since the above electrochemical reaction exhibits a negative change in Gibbs energy, and the energy difference between before and after the reaction can be extracted as a direct current, according to the method for generating an electric power according to the present invention, the electric power generation becomes enabled by using the polyoxyalkylene alkyl ether. A suitable mode of the step (A) in the regulation method of the present invention is the same as in the above-mentioned method for producing polyoxyalkylene alkyl ether acetate according to the present invention.

[System for generating an electric power]

The system for generating an electric power of the present invention includes a step (A) of oxidizing a polyoxyalkylene alkyl ether by an electrochemical reaction in an anode chamber of an electrochemical device equipped with a cathode chamber and the anode chamber to obtain polyoxyalkylene alkyl ether acetate. Since the above electrochemical reaction exhibits a negative change in Gibbs energy, and the energy difference between before and after the reaction can be extracted as a direct current, according to the system for generating an electric power according to the present invention, the electric power generation becomes enabled by using the polyoxyalkylene alkyl ether. A suitable mode of the step (A) in the regulation method of the present invention is the same as in the above-mentioned method for producing polyoxyalkylene alkyl ether acetate according to the present invention.

Regarding the above-mentioned embodiments, the present invention will further disclose the following embodiments.

<1> A method for producing polyoxyalkylene alkyl ether acetate, the method including a step (A) of oxidizing a polyoxyalkylene alkyl ether by an electrochemical reaction in an anode chamber of an electrochemical device equipped with a cathode chamber and the anode chamber to obtain the polyoxyalkylene alkyl ether acetate.

<2> The method for producing polyoxyalkylene alkyl ether acetate according to <1>, wherein the electrochemical device is preferably a fuel cell or an electrolytic device, and more preferably a fuel cell.

<3> The method for producing polyoxyalkylene alkyl ether acetate according to <1> or <2>, wherein the electrochemical device is a fuel cell; and the fuel cell is preferably a solid polymer fuel cell or a solid alkali fuel cell, and more preferably a solid polymer fuel cell.

<4> The method for producing polyoxyalkylene alkyl ether acetate according to any one of <1> to <3>, wherein in the step (A), a gas containing oxygen is fed to the cathode chamber.

<5> The method for producing polyoxyalkylene alkyl ether acetate according to any one of <1> to <4>, wherein the polyoxyalkylene alkyl ether includes a compound represented by the following formula (1):

$$R\text{-}O\text{-}(A\text{-}O)_n\text{-}H \ldots \quad (1)$$

wherein R represents a hydrocarbon group having 1 or more and 36 or less carbon atoms; A represents an alkylene group having 2 or more and 4 or less carbon atoms; and n is an average number of mols of alkyleneoxy groups added which is 0.1 or larger and 100.0 or smaller.

<6> The method for producing polyoxyalkylene alkyl ether acetate according to <5>, wherein A in the formula (1) preferably contains at least one selected from the group consisting of an ethylene group, a propylene group, an isopropylene group, an n-butylene group and an isobutylene group, more preferably contains an alkylene group having 2 or more and 3 or less carbon atoms, still more preferably contains at least one selected from the group consisting of an ethylene group and a propylene group, and further still more preferably contains an ethylene group.

<7> The method for producing polyoxyalkylene alkyl ether acetate according to <5> or <6>, wherein the number of carbon atoms of R in the formula (1) is preferably 4 or larger, more preferably 6 or larger and still more preferably 8 or larger, and preferably 32 or smaller, more preferably 22 or smaller, still more preferably 20 or smaller, further still more preferably 16 or smaller, further still more preferably 14 or smaller and further still more preferably 12 or smaller.

<8> The method for producing polyoxyalkylene alkyl ether acetate according to any one of <5> to <7>, wherein the hydrocarbon group of R in the formula (1) is preferably a saturated or unsaturated straight-chain, branched-chain or cyclic aliphatic hydrocarbon group, or an aromatic hydrocarbon group optionally having a substituent, more preferably a straight-chain or branched-chain alkyl group or alkenyl group, still more preferably a straight-chain or branched-chain alkyl group and further still more preferably a straight-chain alkyl group.

<9> The method for producing polyoxyalkylene alkyl ether acetate according to any one of <5> to <8>, wherein n in the formula (1) is preferably 1.0 or larger, more preferably 1.5 or larger and still more preferably 2.0 or larger, and preferably 50.0 or smaller, more preferably 30.0 or smaller, still more preferably 16.0 or smaller, further still more preferably 14.0 or smaller, further still more preferably 12.0 or smaller and further still more preferably 10.0 or smaller.

<10> The method for producing polyoxyalkylene alkyl ether acetate according to any one of <1> to <9>, wherein in the anode chamber at the start of the reaction, the polyoxyalkylene alkyl ether is present in the state of being a mixture with water.

<11> The method for producing polyoxyalkylene alkyl ether acetate according to <10>, wherein the content of the polyoxyalkylene alkyl ether in the mixture at the start of the reaction is, with the total amount of the polyoxyalkylene alkyl ether and the water being taken to be 100% by mass, preferably 1% by mass or higher, more preferably 2% by mass or higher, still more preferably 3% by mass or higher and further still more preferably 4% by mass or higher, and preferably 95% by mass or lower, more preferably 70% by mass or lower, still more preferably 50% by mass or lower, further still more preferably 30% by mass or lower, further still more preferably 15% by mass or lower and further still more preferably 10% by mass or lower.

<12> The method for producing polyoxyalkylene alkyl ether acetate according to <10> or <11>, wherein the total content of the polyoxyalkylene alkyl ether and the water in the liquid phase in the anode chamber at the start of the reaction is preferably 65% by mass or higher, more preferably 72% by mass or higher, still more preferably 80% by mass or higher, further still more preferably 90% by mass or higher, further still more preferably 90% by mass or higher and further still more preferably 95% by mass or higher, and may also be 100% by mass.

<13> The method for producing polyoxyalkylene alkyl ether acetate according to any one of <1> to <12>, wherein the temperature of the anode chamber in the step (A) is preferably 10°C or higher, more preferably 20°C or higher, still more preferably 30°C or higher and further still more preferably 35°C or higher, and preferably 100°C or lower, more preferably 80°C or lower, still more preferably 60°C or lower, further still more preferably 50°C or lower and further still more preferably 45°C or lower.

<14> A method of regulating the molar fraction of alkyleneoxy groups added in polyoxyalkylene alkyl ether acetate, the method including a step (A) of oxidizing a polyoxyalkylene alkyl ether by an electrochemical reaction in an anode chamber of an electrochemical device equipped with a cathode chamber and the anode chamber to obtain the polyoxyalkylene alkyl ether acetate.

<15> The regulation method according to <14>, wherein the electrochemical device is preferably a fuel cell or an electrolytic device and more preferably a fuel cell.

<16> The regulation method according to <14> or <15>, wherein the electrochemical device is a fuel cell; and the fuel cell is preferably a solid polymer fuel cell or a solid alkali fuel cell, and more preferably a solid polymer fuel cell.

<17> The regulation method according to any one of <14> to <16>, wherein in the step (A), a gas containing oxygen is fed to the cathode chamber.

<18> The regulation method according to any one of <14> to <17>, wherein the polyoxyalkylene alkyl ether includes a compound represented by the following formula (1):

$$R\text{-}O\text{-}(A\text{-}O)_n\text{-}H \ldots \qquad (1)$$

wherein R represents a hydrocarbon group having 1 or more and 36 or less carbon atoms; A represents an alkylene group having 2 or more and 4 or less carbon atoms; and n is an average number of mols of alkyleneoxy groups added which is 0.1 or larger and 100.0 or smaller.

<19> The regulation method according to <18>, wherein A in the formula (1) preferably contains at least one selected from the group consisting of an ethylene group, a propylene group, an isopropylene group, an n-butylene group and an isobutylene group, more preferably contains an alkylene group having 2 or more and 3 or less carbon atoms, still more preferably contains at least one selected from the group consisting of an ethylene group and a propylene group, and further still more preferably contains an ethylene group.

<20> The regulation method according to <18> or <19>, wherein the number of carbon atoms of R in the formula (1) is preferably 4 or larger, more preferably 6 or larger and still more preferably 8 or larger, and preferably 32 or smaller, more preferably 22 or smaller, still more preferably 20 or smaller, further still more preferably 18 or smaller, further still more preferably 16 or smaller, further still more preferably 14 or smaller and further still more preferably 12 or smaller.

<21> The regulation method according to any one of <18> to <20>, wherein the hydrocarbon group of R in the formula (1) is preferably a saturated or unsaturated straight-chain, branched-chain or cyclic aliphatic hydrocarbon group, or an aromatic hydrocarbon group optionally having a substituent, more preferably a straight-chain or branched-chain alkyl group or alkenyl group, still more preferably a straight-chain or branched-chain alkyl group and further still more preferably a straight-chain alkyl group.

<22> The regulation method according to any one of <18> to <21>, wherein n in the formula (1) is preferably 1.0 or larger, more preferably 1.5 or larger and still more preferably 2.0 or larger, and preferably 50.0 or smaller, more preferably 30.0 or smaller, still more preferably 16.0 or smaller, further still more preferably 14.0 or smaller, further still more preferably 12.0 or smaller and further still more preferably 10.0 or smaller.

<23> The regulation method according to any one of <14> to <22>, wherein in the anode chamber at the start of the reaction, the polyoxyalkylene alkyl ether is present in the state of being a mixture with water.

<24> The regulation method according to <23>, wherein the content of the polyoxyalkylene alkyl ether in the mixture at the start of the reaction is, with the total amount of the polyoxyalkylene alkyl ether and the water being taken to be 100% by mass, preferably 1% by mass or higher, more preferably 2% by mass or higher, still more preferably 3% by mass or higher and further still more preferably 4% by mass or higher, and preferably 95% by mass or lower, more preferably 70% by mass or lower, still more preferably 50% by mass or lower, further still more preferably 30% by mass or lower, further still more preferably 15% by mass or lower and further still more preferably 10% by mass or lower.

<25> The regulation method according to <23> or <24>, wherein the total content of the polyoxyalkylene alkyl ether and the water in the liquid phase in the anode chamber at the start of the reaction is preferably 65% by mass or higher, more preferably 72% by mass or higher, still more preferably 80% by mass or higher, further still more preferably 90% by mass or higher and further still more preferably 95% by mass or higher, and may also be 100% by mass.

<26> The regulation method according to any one of <14> to <25>, wherein the temperature of the anode chamber in the step (A) is preferably 10°C or higher, more preferably 20°C or higher, still more preferably 30°C or higher and further still more preferably 35°C or higher, and preferably 100°C or lower, more preferably 80°C or lower, still more preferably 60°C or lower, further still more preferably 50°C or lower and further still more preferably 45°C or lower.

<27> A method for generating an electric power including a step (A) of oxidizing a polyoxyalkylene alkyl ether by an electrochemical reaction in an anode chamber of an electrochemical device equipped with a cathode chamber and the anode chamber to obtain polyoxyalkylene alkyl ether acetate.

<28> The method for generating an electric power according to <27>, wherein the electrochemical device is preferably a fuel cell or an electrolytic device, and more preferably a fuel cell.

<29> The method for generating an electric power according to <27> or <28>, wherein the electrochemical device is a fuel cell; and the fuel cell is preferably a solid polymer fuel cell or a solid alkali fuel cell, and more preferably a solid polymer fuel cell.

<30> The method for generating an electric power according to any one of <27> to <29>, wherein in the step (A), a gas containing oxygen is fed to the cathode chamber.

<31> The method for generating an electric power according to any one of <27> to <30>, wherein the polyoxyalkylene alkyl ether includes a compound represented by the following formula (1):

$$R-O-(A-O)_n-H \text{ ...} \quad\quad (1)$$

wherein R represents a hydrocarbon group having 1 or more and 36 or less carbon atoms; A represents an alkylene group having 2 or more and 4 or less carbon atoms; and n is an average number of mols of alkyleneoxy groups added which is 0.1 or larger and 100.0 or smaller.

<32> The method for generating an electric power according to <31>, wherein A in the formula (1) preferably contains at least one selected from the group consisting of an ethylene group, a propylene group, an isopropylene group, an n-butylene group and an isobutylene group, more preferably contains an alkylene group having 2 or more and 3 or less carbon atoms, still more preferably contains at least one selected from the group consisting of an ethylene group and a propylene group, and further still more preferably contains an ethylene group.

<33> The method for generating an electric power according to <31> or <32>, wherein the number of carbon atoms of R in the formula (1) is preferably 4 or larger, more preferably 6 or larger and still more preferably 8 or larger, and preferably 32 or smaller, more preferably 22 or smaller, still more preferably 20 or smaller, further still more preferably 16 or smaller, further still more preferably 14 or smaller and further still more preferably 12 or smaller.

<34> The method for generating an electric power according to any one of <31> to <33>, wherein the hydrocarbon group of R in the formula (1) is preferably a saturated or unsaturated straight-chain, branched-chain or cyclic aliphatic hydrocarbon group, or an aromatic hydrocarbon group optionally having a substituent, more preferably a straight-chain or branched-chain alkyl group or alkenyl group, still more preferably a straight-chain or branched-chain alkyl group and further still more preferably a straight-chain alkyl group.

<35> The method for generating an electric power according to any one of <31> to <34>, wherein n in the formula (1) is preferably 1.0 or larger, more preferably 1.5 or larger and still more preferably 2.0 or larger, and preferably 50.0 or smaller, more preferably 30.0 or smaller, still more preferably 16.0 or smaller, further still more preferably 14.0 or smaller, further still more preferably 12.0 or smaller and further still more preferably 10.0 or smaller.

<36> The method for generating an electric power according to any one of <27> to <35>, wherein in the anode chamber at the start of the reaction, the polyoxyalkylene alkyl ether is present in the state of being a mixture with water.

<37> The method for generating an electric power according to <36>, wherein the content of the polyoxyalkylene alkyl ether in the mixture at the start of the reaction is, with the total amount of the polyoxyalkylene alkyl ether and the water being taken to be 100% by mass, preferably 1% by mass or higher, more preferably 2% by mass or higher, still more preferably 3% by mass or higher and further still more preferably 4% by mass or higher, and preferably 95% by mass or lower, more preferably 70% by mass or lower, still more preferably 50% by mass or lower, further still more preferably 30% by mass or lower, further still more preferably 15% by mass or lower and further still more preferably 10% by mass or lower.

<38> The method for generating an electric power according to <36> or <37>, wherein the total content of the polyoxyalkylene alkyl ether and the water in the liquid phase in the anode chamber at the start of the reaction is preferably 65% by mass or higher, more preferably 72% by mass or higher, still more preferably 80% by mass or higher, further still more preferably 90% by mass or higher and further still more preferably 95% by mass or higher, and may also be 100% by mass.

<39> The method for generating an electric power according to any one of <27> to <38>, wherein the temperature of the anode chamber in the step (A) is preferably 10°C or higher, more preferably 20°C or higher, still more preferably 30°C or higher and further still more preferably 35°C or higher, and preferably 100°C or lower, more preferably 80°C or lower, still more preferably 60°C or lower, further still more preferably 50°C or lower and further still more preferably 45°C or lower.

<40> A system for generating an electric power including a step (A) of oxidizing a polyoxyalkylene alkyl ether by an electrochemical reaction in an anode chamber of an electrochemical device equipped with a cathode chamber and the anode chamber to obtain polyoxyalkylene alkyl ether acetate.

Examples

Hereinafter, the present invention will be described specifically by the Examples, but the present invention is not any more limited to these Examples.

[Measurement methods]

(1) Measurement methods of the molar fraction and the reaction conversion rate (Conv._GC)

First, in Examples 1, 4 and Comparative Example 1, a reaction mixture formed by the reaction was methyl esterified with diazomethane. Then, in Example 2 and Comparative Example 2, a reaction mixture formed by the reaction was methyl esterified with a 5%-hydrochloric acid methanol solution.

Then, on the methyl esterified reaction mixture, gas chromatography (hereinafter, referred to also as "GC") measurement was carried out under the following condition to determine GC peak areas of each AE and each EC with the number of mols of ethyleneoxy groups (hereinafter, referred to also as "EO") added of up to 15 mols, respectively. (GC condition of Examples 1, 4 and Comparative Example 1)

GC device: 6850, Agilent Technologies, Inc.
Column: ULTRA UA-1HT (15 m × 250 $\mu$m × 0.15 $\mu$m), Agilent Technologies, Inc.
Detector: FID
Carrier: helium gas, 3.8 mL/min
Temperature increase: held at 60°C for 2 min -> raised at 10°C/min up to 350°C → held at 350°C for 30 min
(GC condition of Example 2 and Comparative Example 2)
GC device: 6850, Agilent Technologies, Inc.
Column: ULTRA 1 MethylSiloxane (25 m × 200 $\mu$m × 0.33 $\mu$m), Agilent Technologies, Inc.
Detector: FID
Carrier: helium gas, 1.0 mL/min
Temperature increase: held at 100°C for 5 min -> raised at 5°C/min up to 300°C → held at 300°C for 45 min

The reaction conversion rates of Example 1, 2, 4 and Comparative Examples 1, 2 were calculated by the following expression based on GC analysis values of AE remaining and EC formed in the reaction mixture.

$$\text{Conv.\_GC} = \frac{\text{Area}\%_{EC}}{\text{Area}\%_{AE} + \text{Area}\%_{EC}} \times 100$$

Conv._GC: reaction conversion rate
Area%$_{AE}$: total of GC peak area values of each AE
Area%$_{EC}$: total of GC peak area values of each EC

Here, the molar fraction of each number of mols of EO added was, as in the above, calculated by using GC peak areas of each AE and each EC with the number of mols of EO added of up to 15 mols, respectively.

(2) Measurement method of the reaction conversion rate (Conv._AV)

In Examples 3 to 6, a reaction mixture formed by the reaction was precisely weighed and diluted with ion-exchange water and acetone. Then, neutralization titration was carried out under the following condition on the dilution to determine the titer of a titrant.

Measurement device: potentiometric automatic titration device (AT-510, Kyoto Electronics Mfg. Co. Ltd.)
Titrant: a 0.05 mol/L ethanolic potassium hydroxide aqueous solution

The reaction conversion rates of Examples 3 to 6 were calculated by the following expression on the assumption that acid components in the reaction mixture were all EC.

$$\text{Conv.\_AV[\%]} = \frac{v_{KOH} \cdot C_{KOH} \cdot M_{AE}}{(m_{sample} - v_{KOH} \cdot C_{KOH} \cdot M_{o2}) \cdot w_{AE}^{0}} \times 100$$

Conv.\_AV: reaction conversion rate

$v_{KOH}$: titer of the potassium hydroxide aqueous solution [ml]

$C_{KOH}$: concentration of the potassium hydroxide aqueous solution [mol/L]

$M_{AE}$: molecular weight of AE [g/mol]

$M_{O2}$: molecular weight of oxygen [g/mol]

$m_{sample}$: precise weight of the reaction mixture [g]

$w^0_{AE}$: mass fraction of AE at reaction feeding [g-AE/g-total]

(3) Evaluation method regarding that the polyoxyalkylene alkyl ether acetate according to the present embodiment could contain more of components large in the number of mols of AO added.

In the case where Examples 1,2 satisfied the following expression, it can be evaluated that Examples 1, 2 contained more of components large in the number of mols of EO added than Comparative Examples 1, 2.

$$\frac{\text{Conv.\_GC\_highEO( Example )}\Big/ \text{Conv.\_GC( Example )}}{\text{Conv.\_GC\_highEO( Comp. Ex. )}\Big/ \text{Conv.\_GC( Comp. Ex. )}} > 1$$

Conv.\_GC (Example): reaction conversion rate of Examples

Conv.\_GC (Comparative Example): reaction conversion rate of Comparative Examples

Conv.\_GC\_highEO (Example) was calculated by the following expression.

$$\text{Conv.\_GC\_highEO(Example)} = \frac{\sum_{y=m}^{15}(a^{y} \cdot b^{y})}{\sum_{y=m}^{15} b^{y}}$$

m: rounded-up integer of an average number n of mols of EO added of a product EC of Examples

a: each reaction conversion rate of each number of mols of EO added of a product EC of Examples (see Table 2)

b: each molar fraction of each number of mols of EO added of a raw material AE of Examples (see Table 3)

Conv.\_GC\_highEO (Comparative Example) was calculated by the following expression.

$$\text{Conv.\_GC\_highEO( Comp. Ex. )} = \frac{\sum_{y=m}^{15}(a^{y} \cdot b^{y})}{\sum_{y=m}^{15} b^{y}}$$

m: rounded-up integer of an average number n of mols of EO added of a product EC of Comparative Examples

a: each reaction conversion rate of each number of mols of EO added of a product EC of Comparative Examples (see Table 2)

b: each molar fraction of each number of mols of EO added of a raw material AE of Comparative Examples (see Table 3)

[Production of polyoxyalkylene alkyl ether acetates]

Example 1

(1) Electrochemical device

As an electrochemical device, the following fuel cell system was used.

Fuel cell type: a solid polymer fuel cell (PEM, FC-025-01H, Chemix Co. Ltd.)
Metal plate material: SUS316
Current collector plate material: Au-coated Cu
Separator material: carbon
Separator flow channel: 1 mm in width, 1 mm in rib width, 1 mm in depth, one serpentine flow channel
Electrode area: 50 mm $\times$ 50 mm
Anode catalyst: Pt/C catalyst (amount of Pt loading: 1.7 mg/cm$^2$)
Cathode catalyst: Pt/C catalyst (amount of Pt loading: 1.0 mg/cm$^2$)
Anode catalyst binder: a fluoropolymer electrolyte binder composed of a perfluorocarbonsulfonic acid-based polymer (Nafion(R) polymer dispersion, DuPont de Nemours, Inc.)(amount of the binder: 1 g/g-catalyst carrier)
Cathode catalyst binder: a fluoropolymer electrolyte binder composed of a perfluorocarbonsulfonic acid-based polymer (Nafion(R) polymer dispersion, DuPont de Nemours, Inc.)(amount of the binder: 1 g/g-catalyst carrier)
Anode-side diffusion layer: a carbon paper (TGP-H-060H, Chemix Co. Ltd.)
Cathode-side diffusion layer: a carbon paper (GDL22BB, SGL Carbon, Ltd.)
Electrolyte membrane: a fluoropolymer electrolyte membrane composed of a perfluorocarbonsulfonic acid-based polymer (Nafion(R) NR-212, DuPont de Nemours, Inc.)

(2) Experimental apparatus

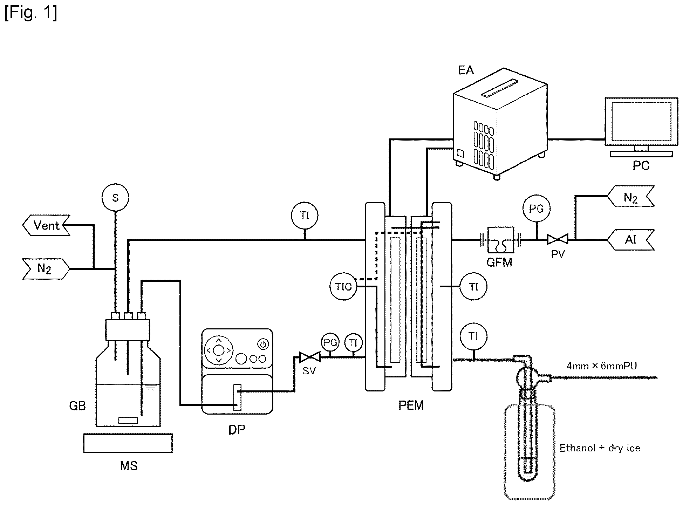

As an experimental apparatus, an apparatus shown in Fig. 1 was used.
Heating of the cell (PEM) was carried out by inserting a cartridge heater in the plates. Nitrogen or air in the cathode chamber was controlled at 20 kPaG by a pressure reducing valve. A raw material in the anode chamber was circulatively fed by using a diaphragm pump (Diaphragm type pulseless Pump, Tacmina Corp.)
A lid of a glass container in which the raw material is put is installed with three holes in total of a hole for nitrogen replacement and sampling, a hole for feeding of the raw material, and a hole for recovering of a reaction mixture, so that sealing with nitrogen could be made.
An electrochemical analyzer (HZ-Pro, Hokuto Denko Corp.) was connected to the current collector plates of the cell and the measurement was carried out.

(3) Experimental procedure

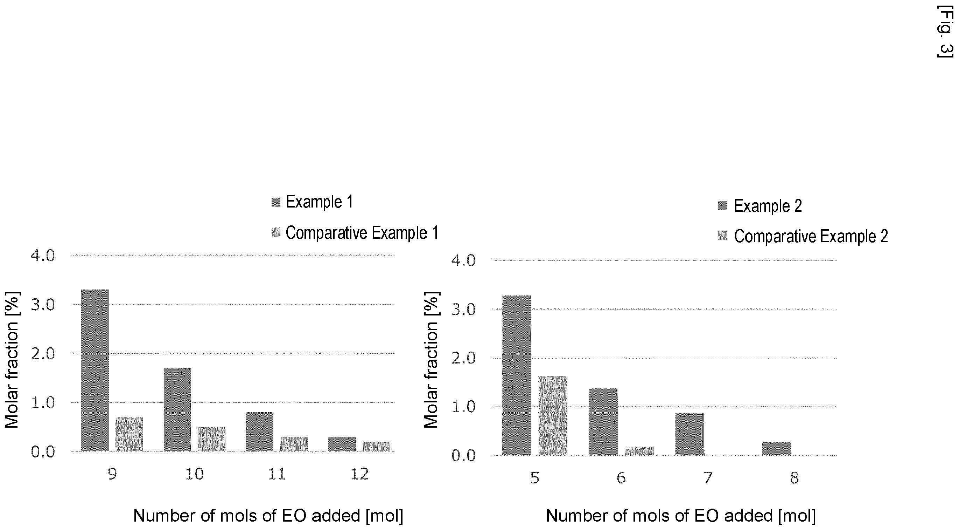

First, nitrogen was flow fed (uncirculated) at 300 mL/min at a pressure of 20 kPaG to the cathode chamber; and ion-exchange water was flow fed (uncirculated) at 20 mL/min to the anode chamber.
Then, the cell was heated to 40°C.
Then, 80 g (ion-exchange water: 76.0 g, AE: 4.0 g) of a 5 mass% polyoxyalkylene alkyl ether (R-O-(A-O)$_n$-H, A = an ethylene group, R = an octyl group (C8), n = 8.6) aqueous solution as a raw material was charged in a 100 mL glass container. The glass container inside was replaced with nitrogen by nitrogen flow. Thereafter, the raw material aqueous solution was stirred by a magnetic stirrer, and thereafter, feeding of the raw material was started under the following condition.
The raw material aqueous solution was circulatively fed at 10 mL/min to the anode chamber; and air was flow fed (uncirculated) at 300 mL/min to the cathode chamber.
Then, after it was confirmed that the potential difference $\Delta E_{c-a}$ (= cathode potential - anode potential) in an open circuit settled on a certain value (730 mV), the reaction was carried out under the following potential condition.
A chronoamperometry (measuring the current at a constant potential difference of 250 mV) was carried out under the condition of a reaction time of 0 to 6 hours and the potential difference $\Delta E_{c-a}$ in the reaction time of 250 mV. Here, the average current value in 6 hours of the reaction time was 2.5 mA.
At the time point of 6 hours of the reaction time, sampling of a reaction mixture was carried out from a sampling port by a syringe.
The GC measurement was carried out on the sampled reaction mixture, and the reaction conversion rate, and the reaction conversion rate and the molar fraction of each number of mols of EO added in a product EC obtained were calculated, respectively. The results are shown in Tables 1, 2 and Fig. 3. The molar fraction of each number of mols of EO added in the raw material AE is shown in Table 3.

Comparative Example 1

(1) Experimental device

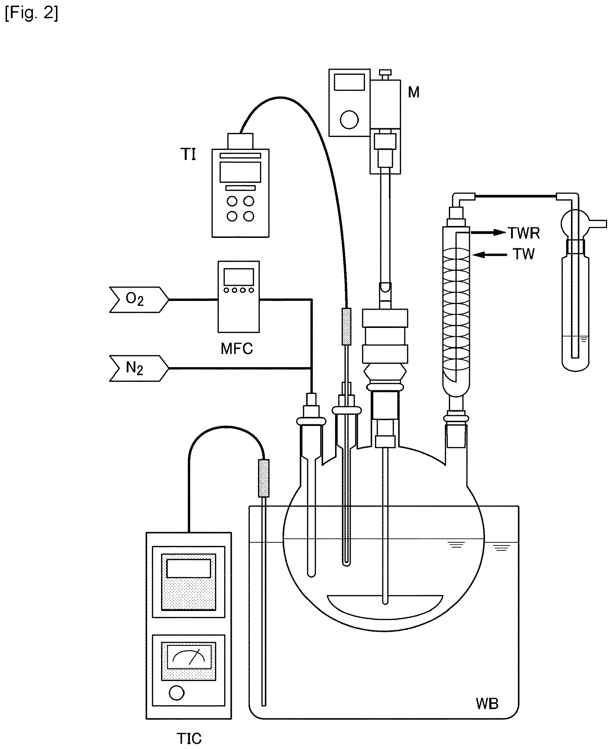

As an experimental device, a device shown in Fig. 2 was used.
As a flask, a five-necked 500-mL round-bottom flask was used, and was installed with the following implements.

- A crescent stirring blade (blade diameter: 75 mm, blade width: 20 mm)
- A stirrer (glass-made stirring shaft (inside the flask), SUS-made stirring shaft (outside the flask))
- A thermocouple (inserted in a sheath pipe for measuring the solution temperature)
- A bubbling tube for gas feeding
- A mass flow meter (MFC, flow volume management of oxygen (purity: 99.5% or higher))
- A cooling tube at the gas outlet (cooling by 25°C tap water, refluxing solution volatile contents)

Then, the flask was heated by using a water bath.

(2) Experimental procedure

First, 93.1 g of a polyoxyalkylene alkyl ether (R-O-(A-O)$_n$-H, A = an ethylene group, R = an octyl group (C8), n = 8.6), 132.5 g of ion-exchange water, and 12.4 g of a platinum-carrying carbon catalyst (Evonik Japan Co., Ltd., platinum content in catalyst solids: 10%, moisture content in the catalyst: 56.7%) were charged in a flask.
Then, while nitrogen was fed in the flask, the flask inside was stirred at 450 rpm, and the temperature of the flask inside was raised to 40°C. Thereafter, the feeding of nitrogen was stopped; and oxygen was fed at 60 mL/min in the flask to start the reaction. After 3 hours from the reaction start, sampling was carried out. The catalyst was separated by filtration from the sampled solution; thereafter, the GC measurement was carried out on the reaction mixture and the reaction conversion rate, and the reaction conversion rate and the molar fraction of each number of mols of EO added in a product EC obtained were calculated, respectively. The results are shown in Tables 1, 2 and Fig. 3. The molar fraction of each number of mols of EO added in the raw material AE is shown in Table 3.
Here, in Example 1 and Comparative Example 1, the reaction times were regulated so that the reaction conversion rates became nearly identical.

Example 2

The reaction was carried out as in Example 1, except for using 80 g (ion-exchange water: 76.0 g, AE: 4.0 g) of a 5 mass% polyoxyalkylene alkyl ether (R-O-(A-O)$_n$-H, A = an ethylene group, R = a lauryl group (C12), n = 2.8) aqueous solution as a raw material, setting the feeding rate of the raw material aqueous solution to the anode chamber at 5 mL/min, and carrying out chronoamperometry under the condition of a reaction time of 0 to 12 hours and 40 min, and the potential difference $\Delta E_{c-a}$ in the reaction time of 0 mV. Then, the potential difference $\Delta E_{c-a}$ in an open circuit was 751 mV, and the average current value in 12 hours and 40 min of the reaction time was 4.6 mA.
At the time point of 12 hours and 40 min of the reaction time, sampling of a reaction mixture was carried out from a sampling port by a syringe.
The GC measurement was carried out on the sampled reaction mixture, and the reaction conversion rate, and the reaction conversion rate and the molar fraction of each number of mols of EO added in the product EC obtained were calculated, respectively. The results are shown in Tables 1 to 2 and Fig. 3. The molar fraction of each number of mols of EO added in the raw material AE is shown in Table 3.

Comparative Example 2

The reaction was carried out as in Comparative Example 1, except for charging 11.9 g of a polyoxyalkylene alkyl ether (R-O-(A-O)$_n$-H, A = an ethylene group, R = a lauryl group (C12), n = 2.8) as a raw material, 224.0 g of ion-exchange water, and 2.5 g of a platinum-carrying carbon catalyst (Evonik Japan Co., Ltd., platinum content in catalyst solids: 10%, moisture content in the catalyst: 56.7%) were charged in the flask.
The GC analysis was carried out as in Example 2 on a sample after 3 hours and 30 min from the reaction start, and the reaction conversion rate and the molar fraction of each number of mols of EO added in the product EC obtained were calculated, respectively. The results are shown in Tables 1 to 2 and Fig. 3. The molar fraction of each number of mols of EO added in the raw material AE is shown in Table 3.

Example 3

The reaction was carried out as in Example 2, except for using 80 g (ion-exchange water: 76.0 g, AE: 4.0 g) of a 5 mass% polyoxyalkylene alkyl ether (R-O-(A-O)$_n$-H, A = an ethylene group, R = an octadecyl group (C18), n = 17.9) aqueous solution as a raw material, and making the reaction time to be 0 to 11 hours. Then, the potential difference $\Delta E_{c-a}$ in an open circuit was 140 mV, and the average current value in 11 hours of the reaction time was 1.0 mA.
At the time point of 11 hours of the reaction time, sampling of a reaction mixture was carried out from a sampling port by a syringe.
The neutralization titration was carried out on the sampled reaction mixture and the reaction conversion rate was calculated. The result is shown in Table 1.

Example 4

The reaction was carried out as in Example 1, except for using, as the electrolyte membrane used for the fuel cell system, a sulfonated styrene-based copolymer electrolyte membrane (NEOSEPTA CSE, Astom Corp.), and making the reaction time to be 0 to 8 hours. Then, the potential difference $\Delta E_{c-a}$ in an open circuit was 710 mV, and the average current value in 8 hours of the reaction time was 4.2 mA.
At the time point of 8 hours of the reaction time, sampling of a reaction mixture was carried out from a sampling port by a syringe.
The GC analysis and the neutralization titration were carried out as in Example 1 on the sampled reaction mixture and the reaction conversion rates in both were calculated, respectively. The results are shown in Table 1.

Example 5

The reaction was carried out as in Example 1, except for using, as the electrolyte membrane used for the fuel cell system, a sulfonated styrene-based copolymer electrolyte membrane (NEOSEPTA CSE, Astom Corp.), using, as the anode catalyst binder, a polytetrafluoroethylene polymer (Polyflon PTFE D210C, Daikin Industries, Inc.), and making the reaction time to be 0 to 8 hours. Then, the potential difference $\Delta E_{c-a}$ in an open circuit was 636 mV, and the average current value in 8 hours of the reaction time was 5.3 mA.
At the time point of 8 hours of the reaction time, sampling of a reaction mixture was carried out from a sampling port by a syringe.
The neutralization titration was carried out on the sampled reaction mixture and the reaction conversion rate was calculated. The result is shown in Table 1.

Example 6

The reaction was carried out as in Example 1, except for using, as the electrolyte membrane used for the fuel cell system, a sulfonated styrene-based copolymer electrolyte membrane (NEOSEPTA CSE, Astom Corp.), using, as the anode catalyst binder, a tetrafluoroethylene-hexafluoropropylene copolymer (Neoflon FEP ND110, Daikin Industries, Inc.), and making the reaction time to be 0 to 8 hours. Then, the potential difference $\Delta E_{c-a}$ in an open circuit was 685 mV, and the average current value in 8 hours of the reaction time was 5.0 mA.
At the time point of 8 hours of the reaction time, sampling of a reaction mixture was carried out from a sampling port by a syringe.
The neutralization titration was carried out on the sampled reaction mixture and the reaction conversion rate was calculated. The result is shown in Table 1.

Table 1

|  | Example 1 | Example 2 | Example 3 | Example 4 | Example 5 | Example 6 |
|---|---|---|---|---|---|---|
| Reaction Model | fuel cell system | fuel cell system | fuel cell system | fuel cell system | fuel cell system | fuel cell system |
| Raw Material AE | $C_8H_{17}(EO)_{8.6}H$ | $C_{12}H_{25}(EO)_{2.8}H$ | $C_{18}H_{37}(EO)_{17.9}H$ | $C_8H_{17}(EO)_{8.6}H$ | $C_8H_{17}(EO)_{8.6}H$ | $C_8H_{17}(EO)_{8.6}H$ |

(continued)

|  | Example 1 | Example 2 | Example 3 | Example 4 | Example 5 | Example 6 |
|---|---|---|---|---|---|---|
| Anode Catalyst | Pt/C | Pt/C | Pt/C | Pt/C | Pt/C | Pt/C |
| Anode Catalyst Binder | Nafion | Nafion | Nafion | Nafion | PTFE | FEP |
| Electrolyte Membrane | Nafion®NR-212 | Nafion®NR-212 | Nafion®NR-212 | CSE | CSE | CSE |
| Temperature [°C] | 40 | 40 | 40 | 40 | 40 | 40 |
| Potential Difference $\Delta E_{c\text{-}a}$ in Open Circuit [mV] | 730 | 751 | 140 | 710 | 636 | 685 |
| Potential Difference $\Delta E_{c\text{-}a}$ in Reaction Time [mV] | 250 | 0 | 0 | 250 | 250 | 250 |
| Reaction Time [h] | 6.0 | 12.7 | 11.0 | 8.0 | 8.0 | 8.0 |
| Average Current [mA] | 2.5 | 4.6 | 1.0 | 4.2 | 5.3 | 5.0 |
| Conv._GC [%] | 15.0 | 15.4 | - | 9.0 | - | - |
| Conv._AV [%] | - | - | 12.0 | 12.1 | 9.1 | 8.2 |

Table 2

| | Example 1 | Comparative Example 1 | Example 2 | Comparative Example 2 |
|---|---|---|---|---|
| Reaction Model | fuel cell system | suspension bed | fuel cell system | suspension bed |
| Raw Material AE | $C_8H_{17}(EO)_{8.6}H$ | $C_8H_{17}(EO)_{8.6}H$ | $C_{12}H_{25}(EO)_{2.8}H$ | $C_{12}H_{25}(EO)_{2.8}H$ |
| Anode Catalyst | Pt/C | Pt/C | Pt/C | Pt/C |
| Anode Catalyst Binder | Nafion | - | Nafion | - |
| Electrolyte Membrane | Nafion® NR-212 | - | Nafion® NR-212 | - |
| Temperature [°C] | 40 | 40 | 40 | 40 |
| Conv._GC [%] | 15.0 | 17.8 | 15.4 | 27.0 |
| Conv._GC_high EO [%] | 3.1 | 1.6 | 10.8 | 11.7 |
| Conv._GC_high EO/Conv._GC | 0.2 | 0.1 | 0.7 | 0.4 |
| (Conv._GC_high EO/Conv._GC)_Example /(Conv._GC_high EO/Conv._GC)_Comparative Example | 2.4 | - | 1.6 | - |
| Reaction conversion rate of Each Number of Mols of EO Added in Product [%] — the number of mols added of 0 | 67.3 | 56.5 | 22.8 | 55.9 |
| the number of mols added of 1 | 38.5 | 51.4 | 14.3 | 21.6 |
| the number of mols added of 2 | 35.2 | 46.2 | 14.8 | 20.7 |
| the number of mols added of 3 | 27.4 | 39.1 | 13.5 | 17.4 |
| the number of mols added of 4 | 22.1 | 32.6 | 11.1 | 12.9 |
| the number of mols added of 5 | 18.7 | 27.4 | 8.4 | 6.9 |
| the number of mols added of 6 | 15.2 | 20.4 | 6.0 | 1.5 |
| the number of mols added of 7 | 12.2 | 14.1 | 6.6 | 0.0 |
| the number of mols added of 8 | 9.2 | 8.6 | 4.3 | 0.0 |
| the number of mols added of 9 | 6.7 | 2.1 | 0.0 | 0.0 |
| the number of mols added of 10 | 4.1 | 3.1 | 0.0 | 0.0 |
| the number of mols added of 11 | 2.3 | 1.4 | 0.0 | 0.0 |
| the number of mols added of 12 | 1.6 | 1.1 | 0.0 | 0.0 |
| the number of mols added of 13 | 0.0 | 0.0 | 0.0 | 0.0 |
| the number of mols added of 14 | 0.0 | 0.0 | 0.0 | 0.0 |
| the number of mols added of 15 | 0.0 | 0.0 | 0.0 | 0.0 |
| Molar Fraction of Each Number of Mols of EO Added in Product [%] — the number of mols added of 0 | 9.3 | 10.3 | 38.8 | 53.6 |
| the number of mols added of 1 | 12.6 | 12.8 | 18.1 | 15.7 |
| the number of mols added of 2 | 13.8 | 14.8 | 17.9 | 14.6 |
| the number of mols added of 3 | 13.2 | 15.0 | 12.5 | 9.6 |
| the number of mols added of 4 | 12.2 | 14.1 | 6.9 | 4.8 |
| the number of mols added of 5 | 11.0 | 12.4 | 3.3 | 1.5 |
| the number of mols added of 6 | 9.3 | 9.4 | 1.4 | 0.2 |
| the number of mols added of 7 | 7.4 | 6.0 | 0.9 | 0.0 |
| the number of mols added of 8 | 5.2 | 3.4 | 0.3 | 0.0 |
| the number of mols added of 9 | 3.3 | 0.7 | 0.0 | 0.0 |
| the number of mols added of 10 | 1.7 | 0.5 | 0.0 | 0.0 |
| the number of mols added of 11 | 0.8 | 0.3 | 0.0 | 0.0 |
| the number of mols added of 12 | 0.3 | 0.2 | 0.0 | 0.0 |
| the number of mols added of 13 | 0.0 | 0.0 | 0.0 | 0.0 |
| the number of mols added of 14 | 0.0 | 0.0 | 0.0 | 0.0 |

| | the number of mols added of 15 | 0.0 | 0.0 | 0.0 | 0.0 |
|---|---|---|---|---|---|

Table 3

| | | Example 1 | Comparative Example 1 | Example 2 | Comparative Example 2 |
|---|---|---|---|---|---|
| Molar Fraction of Each Number of Mols of EO Added in Raw Material AE [%] | the number of mols added of 0 | 3.7 | 3.7 | 26.6 | 26.6 |
| | the number of mols added of 1 | 3.1 | 3.1 | 19.3 | 19.3 |
| | the number of mols added of 2 | 4.6 | 4.6 | 18.3 | 18.3 |
| | the number of mols added of 3 | 6.2 | 6.2 | 14.2 | 14.2 |
| | the number of mols added of 4 | 7.6 | 7.6 | 9.7 | 9.7 |
| | the number of mols added of 5 | 8.7 | 8.7 | 6.2 | 6.2 |
| | the number of mols added of 6 | 9.3 | 9.3 | 3.5 | 3.5 |
| | the number of mols added of 7 | 9.7 | 9.7 | 1.7 | 1.7 |
| | the number of mols added of 8 | 9.6 | 9.6 | 0.5 | 0.5 |
| | the number of mols added of 9 | 9.1 | 9.1 | 0.0 | 0.0 |
| | the number of mols added of 10 | 8.1 | 8.1 | 0.0 | 0.0 |
| | the number of mols added of 11 | 6.8 | 6.8 | 0.0 | 0.0 |
| | the number of mols added of 12 | 5.3 | 5.3 | 0.0 | 0.0 |
| | the number of mols added of 13 | 3.9 | 3.9 | 0.0 | 0.0 |
| | the number of mols added of 14 | 2.7 | 2.7 | 0.0 | 0.0 |
| | the number of mols added of 15 | 1.7 | 1.7 | 0.0 | 0.0 |

From the results of Examples and Comparative Examples, it can be understood that in the anode chamber of the electrochemical device, the electrochemical oxidative reaction of the polyoxyalkylene alkyl ether progressed and the polyoxyalkylene alkyl ether acetate was obtained from the polyoxyalkylene alkyl ether.

Further from Table 2 and Fig. 3, it can be understood that according to the production methods of Examples, as compared with the production methods of Comparative Examples, the reactivity of components large in the number of mols of ethyleneoxy groups added was improved and resultantly, the polyoxyalkylene alkyl ether acetate containing much of components large in the number of mols of ethyleneoxy groups added was obtained.

Further, according to the production methods of Examples, a step of separating the product and the catalyst was unnecessary and as compared with the production methods of Comparative Examples, the production process could be simplified.

Then, according to the production methods of Examples, the energy difference between before and after the reaction could be extracted as a direct current and the materialization of the electric power generation could actually be confirmed.

Reference Signs List

| | |
|---|---|
| PC | Computer for analysis and operation for electrochemical analyzer |
| EA | Electrochemical analyzer |
| AI | Air |
| PG | Onsite pressure gage |
| PV | Pressure reducing valve |
| GFM | Gas flowmeter |
| TI | Thermocouple |
| TIC | Thermocouple (for controlling temperature) |
| PEM | Solid polymer fuel cell |
| PU | Polyurethane material |
| SV | Safety valve |
| DP | Diaphragm pump |
| MS | Magnetic stirrer |
| GB | Glass container |
| Vent | Gas exhaust vent |
| S | Sampling port |
| M | Stirrer |
| TW | Cooling water |
| TWR | Cooling water return |
| MFC | Mass flow controller |
| WB | Water bath |

**Claims**

1. A method for producing polyoxyalkylene alkyl ether acetate, the method comprising a step (A) of oxidizing a polyoxyalkylene alkyl ether by an electrochemical reaction in an anode chamber of an electrochemical device equipped with a cathode chamber and the anode chamber to obtain the polyoxyalkylene alkyl ether acetate.

2. The method for producing polyoxyalkylene alkyl ether acetate according to claim 1, wherein the electrochemical device is a fuel cell.

3. The method for producing polyoxyalkylene alkyl ether acetate according to claim 2, wherein in the step (A), a gas containing oxygen is fed to the cathode chamber.

4. The method for producing polyoxyalkylene alkyl ether acetate according to any one of claims 1 to 3, wherein the polyoxyalkylene alkyl ether comprises a compound represented by the following formula (1):

$$R\text{-}O\text{-}(A\text{-}O)_n\text{-}H \ldots \qquad (1)$$

wherein R represents a hydrocarbon group having 1 or more and 36 or less carbon atoms; A represents an alkylene group having 2 or more and 4 or less carbon atoms; and n is an average number of mols of alkyleneoxy groups added which is 0.1 or larger and 100.0 or smaller.

5. The method for producing polyoxyalkylene alkyl ether acetate according to claim 4, wherein A in the formula (1) comprises at least one selected from the group consisting of an ethylene group and a propylene group.

6. The method for producing polyoxyalkylene alkyl ether acetate according to claim 4 or 5, wherein the number of carbon atoms of R in the formula (1) is 6 or larger and 22 or smaller.

7. The method for producing polyoxyalkylene alkyl ether acetate according to any one of claims 4 to 6, wherein n in the formula (1) is 2.0 or larger and 10.0 or smaller.

8. The method for producing polyoxyalkylene alkyl ether acetate according to any one of claims 1 to 7, wherein a temperature of the anode chamber in the step (A) is 10°C or higher and 100°C or lower.

9. A method for generating an electric power, the method comprising a step (A) of oxidizing a polyoxyalkylene alkyl ether by an electrochemical reaction in an anode chamber of an electrochemical device equipped with a cathode chamber and the anode chamber to obtain polyoxyalkylene alkyl ether acetate.

10. A system for generating an electric power, the system comprising a step (A) of oxidizing a polyoxyalkylene alkyl ether by an electrochemical reaction in an anode chamber of an electrochemical device equipped with a cathode chamber and the anode chamber to obtain polyoxyalkylene alkyl ether acetate.

[Fig. 1]

[Fig. 2]

[Fig. 3]

| INTERNATIONAL SEARCH REPORT | International application No. |
|---|---|
| | **PCT/JP2022/026933** |

### A. CLASSIFICATION OF SUBJECT MATTER

*C25B 5/00*(2006.01)i; *C07C 51/235*(2006.01)i; *C07C 59/125*(2006.01)i; *C25B 3/07*(2021.01)i; *C25B 3/23*(2021.01)i; *H01M 8/06*(2016.01)i; *H01M 8/1009*(2016.01)i
FI:  C25B5/00; C07C59/125 E; C07C51/235; C25B3/07; C25B3/23; H01M8/06; H01M8/1009

According to International Patent Classification (IPC) or to both national classification and IPC

### B. FIELDS SEARCHED

Minimum documentation searched (classification system followed by classification symbols)

C25B5/00; C07C51/235; C07C59/125; C25B3/07; C25B3/23; H01M8/06; H01M8/1009

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2006-249500 A (OTSUKA CHEMICAL COMPANY, LIMITED) 21 September 2006 (2006-09-21) claims, paragraph [0013] | 1, 4-8 |
| Y | | 1-10 |
| Y | WO 2019/172273 A1 (JAPAN SCIENCE AND TECHNOLOGY AGENCY) 12 September 2019 (2019-09-12) claim 9, paragraph [0047] | 1-10 |
| A | CN 105568310 A (NATIONAL DONG HWA UNIVERSITY) 11 May 2016 (2016-05-11) | 1-10 |
| A | JP 62-294191 A (BASF AKTIENGESELLSCHAFT) 21 December 1987 (1987-12-21) | 1-10 |
| A | JP 63-176487 A (BASF AKTIENGESELLSCHAFT) 20 July 1988 (1988-07-20) | 1-10 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **08 September 2022** | **20 September 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2022/026933**

| Patent document cited in search report | | | Publication date (day/month/year) | Patent family member(s) | | | Publication date (day/month/year) |
|---|---|---|---|---|---|---|---|
| JP | 2006-249500 | A | 21 September 2006 | (Family: none) | | | |
| WO | 2019/172273 | A1 | 12 September 2019 | US | 2021/0057758 | A1 | |
| | | | | paragraph [0155], claim 9 | | | |
| | | | | CN | 112136237 | A | |
| CN | 105568310 | A | 11 May 2016 | (Family: none) | | | |
| JP | 62-294191 | A | 21 December 1987 | EP | 250971 | A1 | |
| JP | 63-176487 | A | 20 July 1988 | EP | 278219 | A2 | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013014581 A

- JP 2019506370 W